(19) Europäisches Patentamt
European Patent Office
Office européen des brevets

(11) **EP 2 631 147 A2**

(12) **EUROPÄISCHE PATENTANMELDUNG**

(43) Veröffentlichungstag:
**28.08.2013 Patentblatt 2013/35**

(51) Int Cl.:
**B60W 30/16** (2012.01)

(21) Anmeldenummer: **13151777.3**

(22) Anmeldetag: **18.01.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **27.02.2012 DE 102012202916**

(71) Anmelder: **ROBERT BOSCH GMBH**
**70442 Stuttgart (DE)**

(72) Erfinder:
• **Gugel, Melanie**
**70839 Gerlingen (DE)**
• **Rentschler, Tobias**
**75180 Pforzheim (DE)**

(54) **Verfahren und Vorrichtung zum Betreiben eines Fahrzeugs**

(57) Die Erfindung betrifft ein Verfahren zum Betreiben eines Fahrzeugs (305), umfassend die folgenden Schritte: Erfassen (101) eines Dynamikparameters eines vorausfahrenden weiteren Fahrzeugs (307), Berechnen (103) eines Bewertungsmaßes basierend auf dem erfassten Dynamikparameter, Berechnen (105) einer Fahrzeugsolltrajektorie abhängig von dem Bewertungsmaß und Regeln (107) einer Fahrzeugisttrajektorie auf die Fahrzeugsolltrajektorie.

Die Erfindung betrifft ferner eine entsprechende Vorrichtung (201) sowie ein Computerprogramm.

**Fig. 3**

EP 2 631 147 A2

**Beschreibung**

Die Erfindung betrifft ein Verfahren und eine Vorrichtung zum Betreiben eines Fahrzeugs. Die Erfindung betrifft ferner ein Computerprogramm.

Stand der Technik

Aus der Offenlegungsschrift DE 101 37 292 A1 ist ein Fahrerassistenzsystem und ein Verfahren zu dessen Betrieb bekannt. Hierbei werden Umgebungsdaten einer Verkehrssituation erfasst. Ferner werden Bewegungsdaten des Fahrzeugs erfasst. Es findet dann ein Vergleich der erfassten Umgebungsdaten mit den Bewegungsdaten des Fahrzeugs statt. Nach Maßgabe des Vergleichs wird eine Unterstützung einer Lenkhandhabe geändert.

Offenbarung der Erfindung

Die der Erfindung zugrunde liegende Aufgabe kann darin gesehen werden, ein verbessertes Verfahren und eine verbesserte Vorrichtung zum Betreiben eines Fahrzeugs bereitzustellen.
Die der Erfindung zugrunde liegende Aufgabe kann auch darin gesehen werden, ein entsprechendes Computerprogramm anzugeben.
Diese Aufgaben werden mittels des jeweiligen Gegenstands der unabhängigen Ansprüche gelöst. Vorteilhafte Ausgestaltungen sind Gegenstand von jeweils abhängigen Unteransprüchen.
Nach einem Aspekt wird ein Verfahren zum Betreiben eines Fahrzeugs bereitgestellt. Es wird ein Dynamikparameter eines vorausfahrenden weiteren Fahrzeugs erfasst. Basierend auf dem erfassten Dynamikparameter wird ein Bewertungsmaß berechnet. Abhängig von dem Bewertungsmaß wird eine Fahrzeugsolltrajektorie berechnet. Es wird dann eine Fahrzeugisttrajektorie auf die Fahrzeugsolltrajektorie geregelt.
Gemäß einem weiteren Aspekt wird eine Vorrichtung zum Betreiben eines Fahrzeugs bereitgestellt. Die Vorrichtung umfasst eine Erfassungseinrichtung zum Erfassen eines Dynamikparameters eines vorausfahrenden Fahrzeugs. Ferner ist eine Berechnungseinrichtung zum Berechnen eines Bewertungsmaßes basierend auf dem erfassten Dynamikparameter und zum Berechnen einer Fahrzeugsolltrajektorie abhängig von dem Bewertungsmaß vorgesehen. Des Weiteren umfasst die Vorrichtung eine Regeleinrichtung zum Regeln einer Fahrzeugisttrajektorie auf die Fahrzeugsolltrajektorie.
Nach noch einem Aspekt wird ein Computerprogramm bereitgestellt, welches Programmcode zur Durchführung des Verfahrens zum Betreiben eines Fahrzeugs umfasst, wenn das Computerprogramm auf einem Computer ausgeführt wird.
Die Erfindung umfasst also insbesondere den Gedanken, einen Dynamikparameter eines weiteren Fahrzeugs zu erfassen, welches dem Fahrzeug vorausfährt, insbesondere unmittelbar vorausfährt. Dadurch kann in vorteilhafter Weise ein Bewertungsmaß berechnet werden, welches auf dem erfassten Dynamikparameter basiert. Dieses Bewertungsmaß ist insbesondere ein Kriterium dafür, ob momentan eine kritische Situation vorliegt. Eine kritische Situation kann beispielsweise dadurch entstehen, dass das vorausfahrende Fahrzeug stark abbremst, so dass sich ein Relativabstand zwischen dem Fahrzeug und dem weiteren Fahrzeug reduziert. Eine kritische Situation kann insbesondere auch dann vorkommen, wenn das weitere Fahrzeug in eine Fahrspur des Fahrzeugs einschert.
Abhängig von dem Bewertungsmaß, also insbesondere abhängig davon, wie kritisch die momentane Situation ist, wird eine Fahrzeugsolltrajektorie berechnet. Es wird dann die momentane Fahrzeugisttrajektorie auf diese Fahrzeugsolltrajektorie geregelt, so dass in vorteilhafter Weise die kritische Situation dahingehend entschärft wird, dass beispielsweise wieder ein ausreichender Abstand zu dem vorausfahrenden Fahrzeug eingestellt wird. Insbesondere wird hier ein Abstand zwischen einer Längsachse des Fahrzeugs und einer Längsachse des weiteren Fahrzeugs vergrößert, so dass insbesondere im Fall einer Kollision vorzugsweise eine günstigere Ausrichtung des Fahrzeugs relativ zu dem weiteren Fahrzeug bewirkt wird. Eine Längsachse kennzeichnet insbesondere eine Achse entlang der längsten Ausdehnung des Fahrzeugs.
Vorzugsweise werden die Fahrzeugsolltrajektorie berechnet und die Fahrzeugisttrajektorie auf die Fahrzeugsolltrajektorie geregelt, wenn das Bewertungsmaß einen vorbestimmten Schwellwert überschreitet oder unterschreitet.
Eine Fahrzeugisttrajektorie im Sinne der vorliegenden Erfindung bezeichnet insbesondere eine Trajektorie, also eine Raumkurve, entlang derer sich das Fahrzeug momentan bewegt. Eine Fahrzeugsolltrajektorie im Sinne der vorliegenden Erfindung bezeichnet insbesondere eine Trajektorie, also eine Raumkurve, entlang derer sich das Fahrzeug bewegen soll.
Vorzugsweise wird diese Regelung mittels eines Eingriffs in ein Lenkungssystem durchgeführt. Die Vorrichtung kann insofern beispielsweise als ein Lenkassistenzsystem bezeichnet werden. Auf Englisch werden hierfür in der Regel die Begriffe "Lane Keeping Support" verwendet, um ein solches Fahrerassistenzsystem zu benennen.
Gemäß einer Ausführungsform kann vorgesehen sein, dass mehrere Dynamikparameter des vorausfahrenden weiteren Fahrzeugs erfasst werden. Das Berechnen des Bewertungsmaßes wird dann insbesondere basierend auf den mehreren Dynamikparametern durchgeführt. Hierbei können gleiche oder unterschiedliche Dynamikparameter erfasst werden.

In einer Ausführungsform kann vorgesehen sein, dass kontinuierlich, also zeitlich fortlaufend, der Dynamikparameter erfasst wird.

Nach einer weiteren Ausführungsform kann vorgesehen sein, dass ein Fahrzeugumfeld einer benachbarten Fahrspur relativ zu einer momentanen Fahrzeugposition erfasst wird, wobei basierend auf dem erfassten Fahrzeugumfeld ein zulässiger Bereich für die Fahrzeugsolltrajektorie gebildet wird, der die benachbarte Fahrspur umfasst. Das heißt also insbesondere, dass abhängig von dem Fahrzeugumfeld der benachbarten Fahrspur es vorkommen kann, dass die Fahrzeugsolltrajektorie in dieser benachbarten Fahrspur liegen kann. Das heißt also insbesondere, dass im Fall einer kritischen Situation das Fahrzeug auf die benachbarte Fahrspur ausweichen kann, insofern die Fahrzeugisttrajektorie auf die Fahrzeugsolltrajektorie geregelt wird, welche in der benachbarten Fahrspur liegen kann. Dadurch wird in vorteilhafter Weise ein Abstand zwischen der jeweiligen Längsachse des Fahrzeugs und des weiteren Fahrzeugs noch weiter vergrößert, so dass in vorteilhafter Weise ein Kollisionsrisiko noch weiter vermindert wird. Die benachbarte Fahrspur kann vorzugsweise unmittelbar benachbart zu der Fahrspur des Fahrzeug vorgesehen sein.

In einer anderen Ausführungsform kann vorgesehen sein, dass Fahrspurbegrenzungen einer Fahrspur des Fahrzeugs erfasst werden. Es wird ein weiterer zulässiger Bereich für die Fahrzeugsolltrajektorie gebildet, der innerhalb der Fahrspurbegrenzungen liegt. Die Fahrzeugsolltrajektorie wird vorzugsweise berechnet, indem ein Abstand zwischen einer Längsachse des Fahrzeugs und einer Längsachse des weiteren Fahrzeugs maximiert wird. Das heißt also insbesondere, dass hier die Fahrzeugsolltrajektorie in der Fahrspur des Fahrzeugs liegt, wobei gleichzeitig ein Abstand zwischen der jeweiligen Längsachse des Fahrzeugs und des weiteren Fahrzeugs maximiert wird. Das heißt also insbesondere, dass hier eine Randbedingung dahingehend vorliegt, dass das Fahrzeug die Fahrspurbegrenzungen nicht überfahren darf, um in vorteilhafter Weise eine Kollision mit Fahrzeugen, welche sich auf einer benachbarten Fahrspur befinden, zu vermeiden.

Sofern aber zusätzlich ein Fahrzeugumfeld der benachbarten Fahrspur relativ zu der momentanen Fahrzeugposition, insbesondere zu der Fahrspur des Fahrzeugs, erfasst wird, kann vorgesehen sein, dass ein zulässiger Bereich für die Fahrzeugsolltrajektorie auch die benachbarte Fahrspur umfasst. Und zwar insbesondere dann, wenn sich in dem Fahrzeugumfeld der benachbarten Fahrspur keine weiteren Objekte, insbesondere Fahrzeuge, befinden, die im Fall eines Fahrspurwechsels mit dem Fahrzeug kollidieren könnten. Das heißt also insbesondere, dass abhängig von dem Fahrzeugumfeld der benachbarten Fahrspur der weitere zulässige Bereich für die Fahrzeugsolltrajektorie dahingehend ausgedehnt werden kann, dass dieser die benachbarte Fahrspur umfasst.

Nach einer anderen Ausführungsform kann vorgesehen sein, dass ein Bremsparameter entsprechend einer angeforderten Bremsleistung erfasst wird, wobei das Bewertungsmaß basierend auf dem Bremsparameter berechnet wird. Das heißt also insbesondere, dass beispielsweise erfasst wird, mit welchem Druck ein Fahrer ein Bremspedal betätigt. Der Bremsparameter kann also insbesondere einem vom Fahrer aufgebrachten Bremsdruck entsprechen. In der Regel ist es so, dass je kritischer eine Fahrsituation ist, desto stärker wird der Fahrer das Bremspedal betätigen. Somit ist in vorteilhafter Weise ein weiterer Parameter gebildet, welcher ein zuverlässiges Kriterium für das Vorhandensein einer kritischen Situation ist. Eine solche kritische Situation kann insofern in vorteilhafter Weise schnell und zuverlässig erkannt werden, so dass entsprechende Maßnahmen ergriffen werden können. Hier insbesondere das Berechnen einer Fahrzeugsolltrajektorie und das Regeln der Fahrzeugisttrajektorie auf die Fahrzeugsolltrajektorie, um in vorteilhafter Weise eine Kollision mit dem weiteren Fahrzeug zu vermeiden bzw. eine Kollisionsschwere mit dem weiteren Fahrzeug in vorteilhafter Weise zu verringern.

Nach einer anderen Ausführungsform kann vorgesehen sein, dass ein weiterer Dynamikparameter eines anderen Fahrzeugs im Fahrzeugumfeld des Fahrzeugs erfasst wird, wobei das Bewertungsmaß basierend auf dem weiteren Dynamikparameter berechnet wird. Das heißt also insbesondere, dass zumindest noch ein anderes Fahrzeug in dem Fahrzeugumfeld des Fahrzeugs dahingehend überwacht wird, insofern ein weiterer Dynamikparameter des anderen Fahrzeugs erfasst wird, wobei der weitere Dynamikparameter für das Abschätzen, ob eine kritische Situation vorliegt oder nicht, verwendet wird. Vorzugsweise werden mehrere weitere Dynamikparameter von mehreren anderen Fahrzeugen erfasst. Somit kann in vorteilhafter Weise eine Fahrsituation besonders genau dahingehend erkannt und beurteilt werden, ob diese als kritisch einzuschätzen ist und ob entsprechende Gegenmaßnahmen ergriffen werden müssen.

In einer weiteren Ausführungsform kann vorgesehen sein, dass der Dynamikparameter eine Relativgeschwindigkeit relativ zu dem Fahrzeug umfasst. Vorzugsweise kann der Dynamikparameter eine Kollisionszeit umfassen. Eine Kollisionszeit bezeichnet insbesondere eine Zeit, welche vergehen muss, bevor es zu einer Kollision kommt. Eine Relativgeschwindigkeit kann insbesondere basierend auf einer Dopplermessung gemessen werden. Vorzugsweise kann die Geschwindigkeit des weiteren Fahrzeugs und die Geschwindigkeit des Fahrzeugs gemessen werden, wobei dann die Relativgeschwindigkeit insbesondere durch eine entsprechende Differenzbildung berechnet werden kann.

In einer weiteren Ausführungsform kann vorgesehen sein, dass die Relativgeschwindigkeit genormt wird. Das heißt also insbesondere, dass die Relativgeschwindigkeit durch eine normierte Geschwindigkeit, auch Normgeschwindigkeit genannt, dividiert wird. Der Dynamikparameter kann dann beispielsweise gleich der gemessenen Relativgeschwindigkeit geteilt durch die Normgeschwindigkeit sein. Eine solche Normgeschwindigkeit kann insbesondere eine untere Schwelle einer kritischen Einstufung darstellen.

In einer weiteren Ausführungsform kann vorgesehen sein, dass die Kollisionszeit normiert wird, insofern die Kollisionszeit durch eine Normkollisionszeit geteilt wird. Der Dynamikparameter kann dann insbesondere die Kollisionszeit geteilt durch die Normkollisionszeit sein.

Gemäß einer weiteren Ausführungsform kann vorgesehen sein, dass das Bewertungsmaß berechnet wird, indem der Dynamikparameter mit einem Gewichtungsfaktor multipliziert wird, wobei der weitere Dynamikparameter vorzugsweise mit dem gewichteten Dynamikparameter addiert wird, wobei insbesondere die entsprechend gebildete Summe mit dem Bremsparameter multipliziert wird.

Die entsprechende mathematische Formel für das Bewertungsmaß $\lambda$ kann beispielsweise wie folgt lauten:

$$\lambda = (\alpha_{target}\lambda_1 + \ldots \lambda_n) * a_{bremse} \qquad (1)$$

Hierbei bezeichnet $\lambda_1$ den Dynamikparameter des unmittelbar vorausfahrenden weiteren Fahrzeugs. $\lambda_2$ bis $\lambda_n$ entsprechen den Dynamikparametern von weiteren Objekten im Fahrzeugumfeld des Fahrzeugs. Bei diesen weiteren Objekten kann es sich beispielsweise um weitere Fahrzeuge handeln. $a_{bremse}$ ist ein Maß für den vom Fahrer aufgebrachten Bremsdruck und entspricht hier insbesondere im Allgemeinen dem vorgenannten Bremsparameter entsprechend einer angeforderten Bremsleistung. $\alpha_{target}$ bezeichnet insbesondere einen Gewichtungsfaktor zur Berücksichtigung des vorausfahrenden Fahrzeugs, also insbesondere dem relevanten, potenziellen Kollisionsfahrzeug, bezogen auf das Fahrzeug. Hierbei steht der englische Begriff "target" für "Ziel".

Die Dynamikparameter $\lambda_1$ bis $\lambda_n$ können vorzugsweise wie folgt berechnet werden:

$$\lambda_i = \frac{v_{relativ}}{v_{normiert}} \qquad (2)$$

Hierbei ist i = 1 ... n. $v_{relativ}$ ist die gemessene Differenzgeschwindigkeit bzw. Relativgeschwindigkeit zwischen dem Fahrzeug und dem entsprechenden weiteren Fahrzeug. $v_{normiert}$ stellt insbesondere eine untere Schwelle einer kritischen Einstufung dar, also eine Normgeschwindigkeit.

In einer weiteren Ausführungsform kann alternativ oder zusätzlich optional vorgesehen sein, dass der Dynamikparameter auf Basis gemessener Kollisionszeiten berechnet werden:

$$\lambda_i = \frac{TTC}{TTC_{normiert}} \qquad (3)$$

Hierbei ist i = 1 .... n. "TTC" ist eine Abkürzung für die englischsprachigen Begriffe "time to collision" und steht für eine Kollisionszeit. Hierbei bezeichnet der Wert TTC_normiert eine entsprechende Normkollisionszeit, also einen entsprechenden Normierungsfaktor.

Gemäß einer weiteren Ausführungsform kann vorgesehen sein, dass das Regeln der Fahrzeugisttrajektorie auf die Fahrzeugsolltrajektorie nur dann erfolgt, wenn eine momentane Fahrzeuggeschwindigkeit in einem vorbestimmten Geschwindigkeitsbereich liegt. Insbesondere wenn ein solch vorbestimmter Geschwindigkeitsbereich einen Bereich zwischen 0 km/h und 50 km/h abdeckt, können in vorteilhafter Weise kritische Situationen insbesondere in eine Kolonnenfahrt auf Autobahnen bzw. mehrspurigen Landstraßen abgedeckt werden.

Aus den vorgenannten Formeln ist zu erkennen, dass bei einer Abbremsung des relevanten Kollisionsobjekts, also insbesondere dem unmittelbar vorausfahrenden Fahrzeug, das Bewertungsmaß $\lambda$ schnell ansteigt. Überschreitet $\lambda$ eine vorbestimmte Schwelle bzw. einen vorbestimmten Schwellenwert, so wird daraufhin eine Fahrzeugsolltrajektorie berechnet, wobei dann die Fahrzeugisttrajektorie auf die Fahrzeugsolltrajektorie geregelt wird.

In einer weiteren Ausführungsform kann vorgesehen sein, dass die Erfassungseinrichtung eine oder mehrere Videokameras umfasst. Diese Videokameras sind vorzugsweise in einem Frontbereich des Fahrzeugs anordbar. Das heißt also insbesondere, dass die Videokameras in einem Frontbereich des Fahrzeugs eingebaut werden können. Somit können die Videokameras einen Bereich vor dem Fahrzeug überwachen. Solche Videokameras können insbesondere auch als Videofrontkameras bezeichnet werden.

Gemäß einer weiteren Ausführungsform kann vorgesehen sein, dass die Erfassungseinrichtung einen Radarsensor umfasst, welcher beispielsweise einen Bereich vor dem Fahrzeug sensorisch erfassen kann. Vorzugsweise kann zusätzlich oder alternativ ein weiterer Radarsensor vorgesehen sein, welcher einen seitlichen Bereich bezogen auf das Fahrzeug erfassen kann. Ein seitlicher Bereich bezeichnet hier insbesondere einen lateralen Bereich relativ zu dem Fahrzeug. Somit können in vorteilhafter Weise Objekte im Seitenbereich des Fahrzeugs erkannt werden.

In einer anderen Ausführungsform kann vorgesehen sein, dass Videosensoren verwendet werden, um Objekte im Seitenbereich des Fahrzeugs zu erkennen.

Gemäß einer Ausführungsform kann vorgesehen sein, dass ein Abstand zwischen dem Fahrzeug und dem weiteren Fahrzeug bzw. den weiteren Fahrzeugen erfasst wird, wobei vorzugsweise vorgesehen sein kann, dass das Bewertungsmaß basierend auf dem entsprechenden Abstand berechnet wird.

Die Erfindung wird im Folgenden anhand von bevorzugten Ausführungsbeispielen näher erläutert.

Hierbei zeigen

Fig. 1      ein Ablaufdiagramm eines Verfahrens zum Betreiben eines Fahrzeugs,

Fig. 2      eine Vorrichtung zum Betreiben eines Fahrzeugs und

Fig. 3      zwei Fahrspuren mit einem Fahrzeug umfassend die Vorrichtung zum Betreiben eines Fahrzeugs gemäß Fig. 2.

Im Folgenden können für gleiche Merkmale gleiche Bezugszeichen verwendet werden.

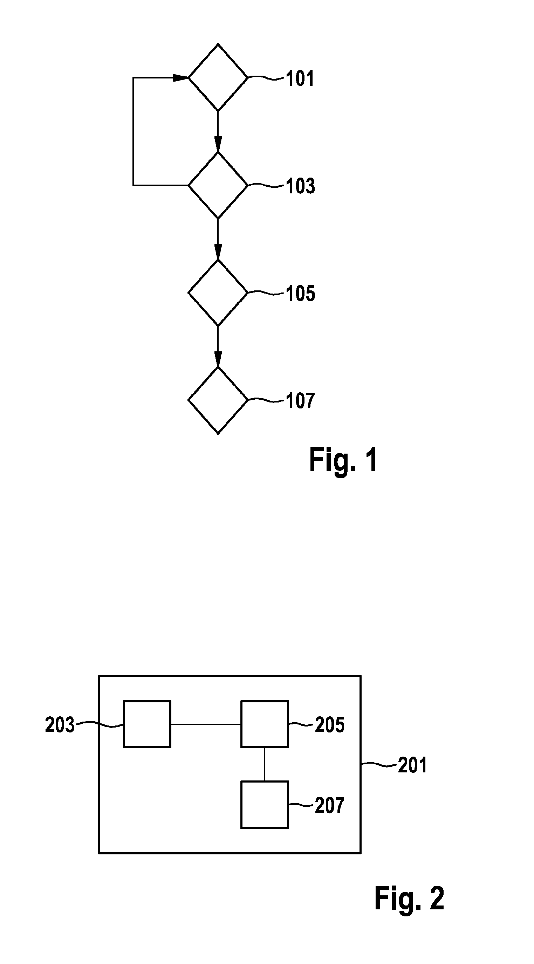

Fig. 1 zeigt ein Ablaufdiagramm eines Verfahrens zum Betreiben eines Fahrzeugs.

Gemäß einem Schritt 101 wird ein Dynamikparameter eines vorausfahrenden weiteren Fahrzeugs erfasst. Bei dem Dynamikparameter kann es sich beispielsweise um eine Relativgeschwindigkeit bezogen auf das Fahrzeug handeln. Vorzugsweise kann der Dynamikparameter eine Kollisionszeit umfassen.

In einem Schritt 103 wird ein Bewertungsmaß basierend auf dem erfassten Dynamikparameter berechnet. Wenn das Bewertungsmaß größer oder gleich einem vordefinierten Schwellwert ist, so wird in einem Schritt 105 eine Fahrzeugsolltrajektorie abhängig von dem Bewertungsmaß berechnet. In einem darauffolgenden Schritt 107 wird dann eine Fahrzeugisttrajektorie auf die Fahrzeugsolltrajektorie geregelt, um in vorteilhafter Weise insbesondere eine Kollision mit dem vorausfahrenden Fahrzeug zu verhindern bzw. eine Kollisionsschwere zu verringern.

Wenn das Bewertungsmaß kleiner gleich dem vorbestimmten Schwellwert ist, so folgt auf den Schritt 103 der Schritt 101, also das Erfassen eines Dynamikparameters des vorausfahrenden weiteren Fahrzeugs.

Fig. 2 zeigt eine Vorrichtung 201 zum Betreiben eines Fahrzeugs (nicht gezeigt).

Die Vorrichtung 201 umfasst eine Erfassungseinrichtung 203 zum Erfassen eines Dynamikparameters eines vorausfahrenden Fahrzeugs. Ferner ist eine Berechnungseinrichtung 205 vorgesehen, welche ausgebildet ist, ein Bewertungsmaß basierend auf dem erfassten Dynamikparameter zu berechnen. Die Berechnungseinrichtung 205 ist ferner ausgebildet, eine Fahrzeugsolltrajektorie abhängig von dem Bewertungsmaß zu berechnen. Die Vorrichtung 201 umfasst des Weiteren eine Regeleinrichtung 207 zum Regeln einer Fahrzeugisttrajektorie auf die Fahrzeugsolltrajektorie.

Die Regeleinrichtung 207 ist vorzugsweise mit hier nicht gezeigten Aktoren eines Lenkungssystems des Fahrzeugs verbunden, so dass die Regeleinrichtung 207 insbesondere ausgebildet ist, das Fahrzeug autonom bzw. teilautonom zu lenken. Vorzugsweise kann die Regeleinrichtung 207 mit weiteren Aktoren eines Antriebssystems des Fahrzeugs verbunden sein, so dass in vorteilhafter Weise die Regeleinrichtung zum Regeln der Fahrzeugisttrajektorie auf die Fahrzeugsolltrajektorie das Fahrzeug beschleunigen kann. Insbesondere kann vorgesehen sein, dass die Regeleinrichtung 207 mit anderen Aktoren eines Bremssystems des Fahrzeugs verbunden ist. Somit kann in vorteilhafter Weise die Regeleinrichtung 207 zwecks Regelung der Fahrzeugisttrajektorie auf die Fahrzeugsolltrajektorie das Fahrzeug in vorteilhafter Weise abbremsen.

In einer nicht gezeigten Ausführungsform kann vorgesehen sein, dass die Erfassungseinrichtung 203 eine oder mehrere Videofrontkameras aufweist, welche einen Frontbereich vor dem Fahrzeug, also einen Bereich, welcher vor dem Fahrzeug liegt, sensorisch erfassen kann. Vorzugsweise kann die Erfassungseinrichtung 205 Radarsensoren umfassen, welche einen Bereich vor dem Fahrzeug sensorisch erfassen und/oder einen lateralen Bereich des Fahrzeugs sensorisch erfassen können. Für eine laterale Erfassung eines Fahrzeugumfelds kann insbesondere ein Videosensor vorgesehen sein. Insbesondere können mehrere Videosensoren vorgesehen sein. Mittels der vorgenannten Sensorik, also insbesondere Radarsensoren und Videosensoren und der oder den Videofrontkameras, ist insbesondere in vorteilhafter Weise eine Erkennung von Objekten im Seitenbereich und im Frontbereich des Fahrzeugs ermöglicht.

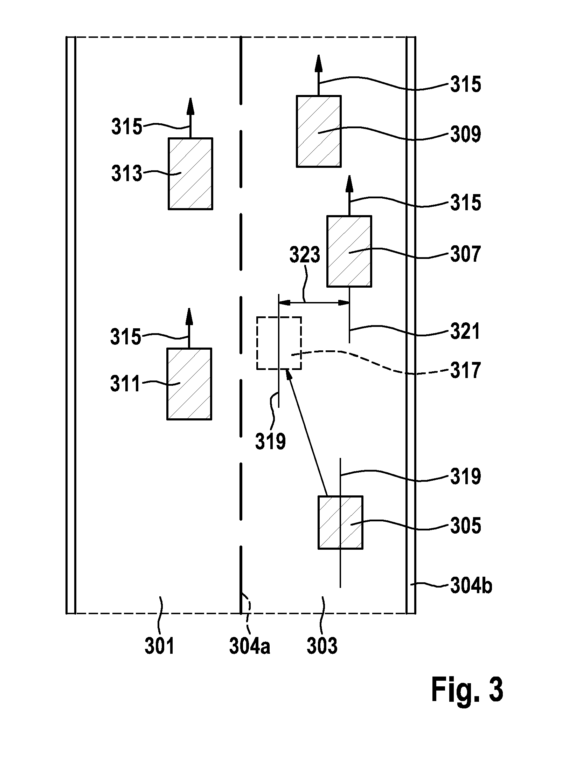

Fig. 3 zeigt zwei nebeneinander verlaufenden Fahrspuren 301 und 303 mit entsprechenden Fahrspurbegrenzungen 304a und 304b. Das heißt also, dass die Fahrspur 303 mittels der zwei Fahrspurbegrenzungen 304a und 304b begrenzt ist. Die Fahrspur 301, welche links unmittelbar benachbart zu der Fahrspur 303 verläuft, ist von dieser mittels der Fahrspurbegrenzung 304a abgegrenzt. Eine weitere Fahrspurbegrenzung, um die Fahrspur 301 von weiteren hier nicht gezeigten Fahrspuren abzugrenzen, ist der Übersicht halber in Fig. 3 nicht gezeigt.

Auf der Fahrspur 303 fährt ein Fahrzeug 305 umfassend die Vorrichtung 201 gemäß Fig. 2. Der Übersicht halber ist die Vorrichtung 201 in Fig. 3 nicht eingezeichnet.

Des Weiteren fahren noch vier weitere Fahrzeuge 307, 309, 311 und 313 auf den beiden Fahrspuren 301 und 303. Hierbei fährt das Fahrzeug 307 unmittelbar vor dem Fahrzeug 305 auf der Fahrspur 303. Vor dem Fahrzeug 307 fährt das Fahrzeug 309 ebenfalls auf der Fahrspur 303. Auf der linken Fahrspur 301 fahren die beiden Fahrzeuge 311 und 313 hintereinander, wobei das Fahrzeug 313 vor dem Fahrzeug 311 fährt.

Eine entsprechende Vorwärtsbewegung der Fahrzeuge 307, 309, 311 und 313 ist symbolisch mittels eines Pfeils mit dem Bezugszeichen 315 gekennzeichnet.

Die Vorrichtung 201 des Fahrzeugs 305 erfasst Dynamikparameter der Fahrzeuge 307, 309, 311 und 313. Diese Dynamikparameter können beispielsweise eine jeweilige Relativgeschwindigkeit umfassen. Vorzugsweise umfassen die Dynamikparameter eine jeweilige Kollisionszeit.

Basierend auf den erfassten Dynamikparametern, $\lambda_i$ mit i = 1, 2, 3, 4, wird ein Bewertungsmaß berechnet. Die Berechnung wird beispielsweise gemäß folgender mathematischer Formel durchgeführt:

$$\lambda = (\alpha_{target}\lambda_1 + \lambda_2 + \lambda_3 + \lambda_4) * a_{bremse}$$

Hierbei steht $\lambda$ für das Bewertungsmaß. $\alpha_{target}$ ist ein Gewichtungsfaktor zur Berücksichtigung des relevanten, potenziellen Kollisionsfahrzeuges, hier das unmittelbar vorausfahrende Fahrzeug 307, bezogen auf das Fahrzeug 305. $a_{bremse}$ ist ein Bremsparameter entsprechend einer angeforderten Bremsleistung.

$\lambda_i$, wobei i = 1, 2, 3, 4 ist, wird vorzugsweise nach folgender mathematischer Formel berechnet:

$$\lambda_i = \frac{v_{relativ}}{v_{normiert}}$$

Hierbei bezeichnet $v_{relativ}$ die entsprechende Differenzgeschwindigkeit zwischen dem Fahrzeug 305 und dem jeweiligen Fahrzeug 307, 309, 311 und 313. $v_{normiert}$ stellt eine untere Schwelle einer kritischen Einstufung dar und ist insofern ein Normierungsgeschwindigkeitswert bzw. Normgeschwindigkeit.

Alternativ oder zusätzlich optional kann vorgesehen sein, $\lambda_i$ auf Basis gemessener Kollisionswerte zu berechnen. Dies kann vorzugsweise mittels folgender mathematischer Formel durchgeführt werden:

$$\lambda_i = \frac{TTC}{TTC_{normiert}}$$

Hierbei bezeichnet $TTC_{normiert}$ eine Kollisionsnormierungszeit bzw. Normkollisionszeit und stellt insofern ebenfalls eine untere Schwelle einer kritischen Einstufung dar.

Bremst beispielsweise das relevante Kollisionsobjekt, hier insbesondere das unmittelbar vorausfahrende Fahrzeug 307, stark ab, so steigt das Bewertungsmaß $\lambda$ schnell an. Überschreitet $\lambda$ einen vorbestimmten Schwellwert, so wird eine Fahrzeugsolltrajektorie berechnet, wobei dann die Fahrzeugisttrajektorie auf die Fahrzeugsolltrajektorie geregelt wird, um in vorteilhafter Weise eine Kollision mit dem vorausfahrenden Fahrzeug 307 zu vermeiden. Eine Sollposition des Fahrzeugs 305 auf der Fahrzeugsolltrajektorie des Fahrzeugs 305 ist hier symbolisch mit dem Bezugszeichen 317 gekennzeichnet.

Die Fahrzeugsolltrajektorie wird hierbei insbesondere so gewählt bzw. berechnet, dass ein Abstand zwischen einer Längsachse 319 des Fahrzeugs 305 und einer Längsachse 321 des Fahrzeugs 307 maximal wird, ohne dass dabei das Fahrzeug 305 die Fahrspurbegrenzung 304a überschreitet, um in vorteilhafter Weise eine Kollision mit den Fahrzeugen 311 und 313 der Fahrspur 301 zu verhindern.

Sofern die Vorrichtung 201 des Fahrzeugs 305 detektiert und erkennt, dass sich auf der Fahrspur 301 seitlich von dem Fahrzeug 305 keine Fahrzeuge befinden, so kann entsprechend eine Fahrzeugsolltrajektorie auch auf der Fahrspur 301 angeordnet sein, so dass zwecks Vermeidung einer Kollision mit dem vorausfahrenden Fahrzeug 307 das Fahrzeug 305 autonom auch auf die Fahrspur 301 wechseln kann. Das heißt also insbesondere, dass das Fahrzeug 305 auch auf der Fahrspur 301 positioniert werden kann, um eine Kollision mit dem Fahrzeug 307 zu verhindern.

In einer nicht gezeigten Ausführungsform kann vorgesehen sein, dass ein jeweiliger Abstand zwischen dem Fahrzeug 305 und den weiteren Fahrzeugen 307, 309, 311 und 313 erfasst wird, wobei $\lambda$ insbesondere abhängig von den Abständen berechnet wird. Das heißt also insbesondere, dass in der obigen Formel noch zusätzlich die Abstände mitberücksichtigt werden können.

Die obigen Ausführungen in Bezug zu Fig. 3 gelten insbesondere analog für mehr oder weniger als vier weitere Fahrzeuge.

Zusammenfassend umfasst die Erfindung also insbesondere den Gedanken, eine Fahrzeugsolltrajektorie, hier insbesondere eine laterale Position und eine Orientierung in einer Fahrspur, zu verändern, wenn eine kritische Fahrsituation auftritt. Das Auftreten einer solchen kritischen Fahrsituation ist insbesondere so definiert, wenn das Bewertungsmaß einen vordefinierten bzw. vorbestimmten Schwellwert überschreitet. Es wird in diesem Fall die Fahrzeugsolltrajektorie dann so berechnet, dass sich das Fahrzeug in einen sichereren Spurbereich bewegt. Dadurch wird in vorteilhafter Weise eine Kollision verhindert bzw. im Fall eines Zusammenstoßes in vorteilhafter Weise eine günstige Ausrichtung bewirkt.

Ferner umfasst die Erfindung insbesondere den Gedanken, dass durch Bestimmung des Bewertungsmaßes für die kritische Situation eine Fahrspursollposition, also die Fahrzeugsolltrajektorie, so gewählt wird, dass sich der Abstand zu den situativ beteiligten Fahrzeugen maximiert. Das heißt also insbesondere, dass ein Abstand zwischen den entsprechenden Längsachsen maximiert werden kann. Dies führt insbesondere bei starken Verzögerungsvorgängen in Fahrzeugkolonnen zu einem höheren Sicherheitsgefühl beim Fahrer. Die Reaktion der Vorrichtung, also eine entsprechende Systemreaktion, liegt näher an dem Fahrerverhalten. Es ist somit in vorteilhafter Weise ein positiver Einfluss auf die kritische Verkehrssituation zu erwarten. Dies führt in vorteilhafter Weise zu einer höheren Systemakzeptanz beim Fahrer.

In der Erfindung wird insofern insbesondere erstmalig in einem Lane Keeping Support (LKS)-System, also einem Lenkassistenzsystem, die Fahrzeugorientierung in kritischen Situationen so beeinflusst, dass sich ein Systemverhalten ähnlich einer Fahrerreaktion ergibt. Dies führt zu einer höheren Systemakzeptanz beim Fahrer. In heutigen bekannten Systemen wird bei einer erkannten kritischen Situation, beispielsweise einem ABS Regeleingriff, starke Bremsung, das LKS System deaktiviert. Bei Einschersituationen anderer Fahrzeuge vor dem eigenen Fahrzeug entsteht im Stand der Technik keine Systemverhaltensänderung, es wird die zentrale Spursollposition gehalten. Ein sehr oft auf Autobahnen vorkommender Fall ist die Fahrt in Kolonnen. Bewegt sich diese Kolonne mit niederen Durchschnittsgeschwindigkeiten, so ist die Spurwechselrate sehr hoch und auch in der Längsbewegungsrichtung treten oft starke Verzögerungen der Fahrzeuge auf. Mittels der Erfindung ist aber schnelles und sicheres Reagieren auf solche Situationen ermöglicht, insofern hier das Fahrzeug auf eine sichere Fahrzeugsolltrajektorie geregelt wird.

## Patentansprüche

1. Verfahren zum Betreiben eines Fahrzeugs (305), umfassend die folgenden Schritte:

   - Erfassen (101) eines Dynamikparameters eines vorausfahrenden weiteren Fahrzeugs (307),
   - Berechnen (103) eines Bewertungsmaßes basierend auf dem erfassten Dynamikparameter,
   - Berechnen (105) einer Fahrzeugsolltrajektorie abhängig von dem Bewertungsmaß und
   - Regeln (107) einer Fahrzeugisttrajektorie auf die Fahrzeugsolltrajektorie.

2. Verfahren nach Anspruch 1, wobei ein Fahrzeugumfeld einer benachbarten Fahrspur (301, 303) relativ zu einer momentanen Fahrzeugposition erfasst wird und wobei basierend auf dem erfassten Fahrzeugumfeld ein zulässiger Bereich für die Fahrzeugsolltrajektorie gebildet wird, der die benachbarte Fahrspur (301, 303) umfasst.

3. Verfahren nach Anspruch 1 oder 2, wobei Fahrspurbegrenzungen (304a, 304b) einer Fahrspur (301, 303) des Fahrzeugs (305) erfasst werden, ein weiterer zulässiger Bereich für die Fahrzeugsolltrajektorie gebildet wird, der innerhalb der Fahrspurbegrenzungen (304a, 304b) liegt, und wobei die Fahrzeugsolltrajektorie berechnet wird, indem ein Abstand (323) zwischen einer Längsachse (319) des Fahrzeugs (305) und einer Längsachse (321) des weiteren Fahrzeugs (307) maximiert wird.

4. Verfahren nach einem der vorherigen Ansprüche, wobei ein Bremsparameter entsprechend einer angeforderten Bremsleistung erfasst wird und das Bewertungsmaß basierend auf dem Bremsparameter berechnet wird.

5. Verfahren nach einem der vorherigen Ansprüche, wobei ein weiterer Dynamikparameter eines anderen Fahrzeugs (309, 311, 313) im Fahrzeugumfeld des Fahrzeugs (305) erfasst wird und das Bewertungsmaß basierend auf dem weiteren Dynamikparameter berechnet wird.

6. Verfahren nach einem der vorherigen Ansprüche, wobei der Dynamikparameter eine Relativgeschwindigkeit relativ zu dem Fahrzeug (305) und/oder eine Kollisionszeit und/oder einen Abstand umfasst.

7. Verfahren nach Anspruch 6 soweit rückbezogen auf die Ansprüche 4 und 5, wobei das Bewertungsmaß berechnet wird, indem der Dynamikparameter mit einem Gewichtungsfaktor multipliziert wird, wobei der weitere Dynamikparameter mit dem gewichteten Dynamikparameter addiert wird und wobei die entsprechend gebildete Summe mit dem Bremsparameter multipliziert wird.

8. Vorrichtung (201) zum Betreiben eines Fahrzeugs (305), umfassend:

   - eine Erfassungseinrichtung (203) zum Erfassen eines Dynamikparameters eines vorausfahrenden Fahrzeugs (307),
   - einer Berechnungseinrichtung (205) zum Berechnen eines Bewertungsmaßes basierend auf dem erfassten Dynamikparameter und zum Berechnen einer Fahrzeugsolltrajektorie abhängig von dem Bewertungsmaß und
   - eine Regeleinrichtung (207) zum Regeln einer Fahrzeugisttrajektorie auf die Fahrzeugsolltrajektorie.

9. Computerprogramm, umfassend Programmcode zur Durchführung des Verfahrens nach einem der Ansprüche 1 bis 7, wenn das Computerprogramm auf einem Computer ausgeführt wird.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137292 A1